# EUROPÄISCHE PATENTANMELDUNG

(11) **EP 4 748 211 A1**
(43) Veröffentlichungstag der Anmeldung: **27.05.2026**
(21) Anmeldenummer: 25214220.3
(22) Anmeldetag: 07.11.2025
(51) Int. Cl.: A01B 39/18

(54) **HACKGERÄT**

(30) Priorität: 21.11.2024 DE 102024134235; 21.11.2024 DE 102024134236
(71) Anmelder: Organic Agrar Miller GmbH, 87769 Oberrieden (DE)
(72) Erfinder: Miller, Christoph, 87769 Oberrieden (DE)
(74) Vertreter: Baur & Weber Patentanwälte PartG mbB

(57) **Zusammenfassung**

Es wird ein Hackgerät (12) beschrieben, das ein an einem Zugfahrzeug oder an einer Querstrebe (10) befestigbares Halteelement (14) aufweist, an das sich ein im Wesentlichen horizontal ausgerichteter Aggregatrahmen (16) anschließt, wobei der Aggregatrahmen (16) auf beiden Seiten jeweils einen seitlich zu einer Vorwärtsfahrrichtung abstehenden Arm (24) umfasst, welche am Ende jeweils ein Hackwerkzeug (26) aufweisen, wobei das Hackwerkzeug (26) relativ zu seinem Arm (24) über eine Stellvorrichtung kontinuierlich um mindestens eine Achse (32; 52) verschwenkbar ist, wobei wenigstens einer der Arme (24) relativ zum Aggregatrahmen (16) beweglich ist.

## Beschreibung

Die Erfindung betrifft ein Hackgerät.

Aus dem allgemeinen Stand der Technik sind Hackgeräte bekannt, die an einem landwirtschaftlichen Fahrzeug im Front- bzw. Heckbereich oder in einem Zwischenachsbereich montiert und zur Bodenbearbeitung auf einem Acker eingesetzt werden. Am Hackgerät sind Werkzeuge beispielsweise in Form von Hackmessern und Scharen angebracht. Üblicherweise wird zur Eindringung in den Ackerboden eine Druckbeaufschlagung am Hackgerät vorgenommen. Die Hackmesser können auch in mehreren diskreten Positionen in ihrer Lage verändert werden, um unterschiedliche Abstände der Pflanzenreihen oder dem Bereich zwischen den Pflanzenreihen bearbeiten zu können.

Des Weiteren sind aus dem Stand der Technik Weiterentwicklungen derartiger Hackgeräte bekannt.

So beschreibt die EP 3 772 265 A1 eine Hackvorrichtung zur Kultivierung von in Reihen angebauten Nutzpflanzen oder Feldfrüchten, mit einem Aggregatrahmen und einem Träger, an welchem zumindest zwei Hackwerkzeuge in Längsrichtung des Trägers gesehen seitlich zueinander versetzt angeordnet sind, wobei der seitliche Abstand der Hackwerkzeuge zueinander einstellbar ist, wobei zumindest ein Hackwerkzeug mit einem quer zur Längsachse des Trägers verlaufenden, an dem Träger befestigten Verstellmittel verbunden ist, wobei das Verstellmittel werkzeuglos betätigbar ist, um den seitlichen Abstand des zumindest einen Hackwerkzeugs gegenüber dem Träger oder dem anderen Hackwerkzeug einzustellen.

Aus der EP 3 745 837 A1 ist eine justierbare Hackvorrichtung zum Entfernen von auf einem Boden befindlichen Unkraut bekannt, wobei die Hackvorrichtung ein Tragegestell aufweist, an dem eine Hackeinheit angeordnet ist, welche einen Basissteg und zumindest zwei parallel zueinander angeordnete Querstreben umfasst, die jeweils drehbar an dem zumindest einen Basissteg gelagert sind, welche zwei parallel zu dem Basissteg verlaufende Verbindungsstege umfasst, die die zwei Querstreben miteinander mechanisch verbinden, welche zwei Scharen umfasst, die in einem Normalabstand zum Basissteg an den Querstreben angeordnet sind, und welche eine Stelleinrichtung umfasst, die an zumindest zwei Querstreben oder einer Querstrebe und dem Basissteg zum Drehen derselben mittels eines linear verschiebbaren Stellarms angreift.

In der EP 4 282 238 A1 wird ein Bodenbearbeitungsgerät für die mechanische Unkrautbekämpfung in Reihen von Kulturpflanzen beschrieben, aufweisend einen an einer Zugmaschine befestigbaren Aggregatrahmen zum Bewegen entlang einer Fahrtrichtung und eine an dem Aggregatrahmen befestigte Bearbeitungseinheit. Die Bearbeitungseinheit weist ein Aggregatrahmenartiges Element, wobei die Ausdehnung des Aggregatrahmenartigen Elements quer zur Fahrtrichtung veränderbar ist, ein über ein erstes Verbindungselement an dem Aggregatrahmenartigen Element befestigtes erstes Bodenbearbeitungswerkzeug, ein über ein zweites Verbindungselement an dem Aggregatrahmenartigen Element befestigtes zweites Bodenbearbeitungswerkzeug, und ein im Querschnitt zylinderförmig ausgebildetes Schwenkachselement auf. Das erste und das zweite Bodenbearbeitungswerkzeug sind quer zur Fahrtrichtung auf verschiedenen Seiten des Schwenkachselements angeordnet. Das erste Verbindungselement weist einen ersten ringförmigen, das Schwenkachselement hülsenartig umschließenden Abschnitt auf und das zweite Verbindungselementweist einen zweiten ringförmigen Abschnitt auf. Das erste und zweite Verbindungselement sind derart um das Schwenkachselement schwenkbar angeordnet, dass durch eine Veränderung der Ausdehnung des Aggregatrahmenartigen Elements quer zur Fahrtrichtung eine Veränderung des Abstandes zwischen dem ersten Bodenbearbeitungswerkzeug und dem zweiten Bodenbearbeitungswerkzeug quer zur Fahrtrichtung bewirkt wird.

Die EP 3 412 124 A1 betrifft eine Rollhacke umfassend wenigstens eine Rollscheibe und eine Halterung mit einem Verbindungselement zur Befestigung an einem Fahrzeug und einem Anschlusselement, wobei die wenigstens eine Rollscheibe um ihre Achse drehbar in dem Anschlusselement aufgenommen ist, wobei das Anschlusselement und das Verbindungselement zur Einstellung eines Anstellwinkels der Rollscheibe gegeneinander verdrehbar sind, wobei das Verbindungselement oberhalb des Anschlusselements angeordnet ist und wobei zwischen Anschlusselement und Verbindungselement eine erste, ferngesteuerte Schwenkvorrichtung zur Einstellung des Anstellwinkels vorgesehen ist.

Die EP 4 265 087 A1 beschreibt ein Gerät insbesondere zur mechanischen Unkrautbekämpfung, mit einem Träger, an dem mindestens zwei Hackwerkzeuge, bestehend aus Stiel und Scharre, lateral angebracht sind, welche durch mindestens eine Verschwenkeinheit pro Träger um eine Verschwenkachse entlang der Stiele verschwenkt werden können, und bei denen die Scharre einen exzentrischen und vom Rand entfernten Mündungspunkt des Stils aufweist und lateral am Rand mindestens eine Klinge ausbildet.

Die AT 522163 A4 beschreibt eine Reihenhackmaschine mit einer Hackeinheit mit jeweils zwei beweglichen Hackelementen pro Reihe, die jeweils ein um eine Achse parallel zur Fahrtrichtung schwenkbar angeordnetes Hackwerkzeug aufweisen, wobei die beiden Hackwerkzeuge quer zur Fahrtrichtung betrachtet einen Abstand aufweisen, in Fahrtrichtung betrachtet aber mindestens aneinandergrenzen und so den gesamten Zwischenraum zwischen zwei Reihen bearbeiten können. Die Hackwerkzeuge werden durch Zylinder angetrieben, die vorzugsweise weit unten an den Hackwerkzeugen angreifen.

Ausgehend von diesem Stand der Technik hat sich der Erfinder nun die Aufgabe gestellt, ein verbessertes Hackgerät zu schaffen.

Diese Aufgabe wird durch die Merkmale des Anspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird ein Hackgerät geschaffen, das einen an einem Zugfahrzeug oder an einer Querstrebe befestigbares Halteelement aufweist, an das sich ein im Wesentlichen horizontal ausgerichteter Aggregatrahmen anschließt, wobei der Aggregatrahmen auf beiden Seiten jeweils einen seitlich zu einer Vorwärtsfahrrichtung abstehenden Arm umfasst, welche am Ende jeweils ein Hackwerkzeug aufweisen, wobei das Hackwerkzeug relativ zu seinem Arm über eine Stellvorrichtung kontinuierlich um mindestens eine Achse verschwenkbar ist, und wobei wenigstens einer der Arme relativ zum Aggregatrahmen beweglich ist.

Ein Hackaggregat des Hackgeräts wird im Betrieb zwischen zwei Pflanzenreihen geführt. Üblicherweise umfasst das Hackgerät mehrere Hackaggregate, um gleichzeitig mehrere Pflanzenreihen bearbeiten zu können. Die Erfindung wird in der nachfolgenden Beschreibung zur Vereinfachung lediglich anhand eines einzelnen Hackaggregats beschrieben. Das Hackwerkzeug ist üblicherweise als Hackmesser ausgeführt. Demnach lassen sich bei dem erfindungsgemäßen Hackgerät als zusätzliche Funktion ein oder mehrere Winkel des Hackwerkzeugs, insbesondere relativ zu Boden und/oder Pflanzenreihe, stufenlos einstellen und somit kontinuierlich verschwenken, da das Hackwerkzeug relativ zum Aggregatrahmen durch Rotation um wenigstens eine Achse kontinuierlich verschwenkbar ist. Die Verstellung der Hackwerkzeuge ist für beide Arme unabhängig möglich. Auf diese Weise ist eine optimale Anpassung an die jeweilige Bearbeitungssituation möglich. Diesem Zweck dient auch die bewegliche Ausführung wenigstens eines der beiden Arme. Vorteilhaft ist es, wenn die beiden Arme unabhängig voneinander relativ zum Aggregatrahmen beweglich sind. Dabei kann die Bewegung der Arme mit einem Aktuator erfolgen, beispielsweise mit einem elektrischen Linearaktuator, der von der Steuerschaltung aktiviert wird und selbsthemmend ausgeführt sein kann. Anstelle des weiteren Aktuators kann auch ein Hydraulikzylinder oder eine Spindel eingesetzt werden. Es ist außerdem möglich, einen direkt oder indirekt wirkenden Stellmotor einzusetzen, der beispielswiese über Ketten oder Seile wirkt.

Gemäß einer Ausführungsform der Erfindung ist die Achse im Wesentlichen vertikal angeordnet.

Dabei ändert sich der Winkel zwischen Pflanzenreihe und dem Hackwerkzeug kontinuierlich.

Gemäß einer weiteren Ausführungsform der Erfindung ist die Achse im Wesentlichen horizontal angeordnet.

Dabei ändert sich der Anstellwinkel des Hackwerkzeugs zwischen Boden und Hackwerkzeug kontinuierlich. Die horizontale Achse ist dabei parallel zu einer Bearbeitungsfläche angeordnet und schließt mit einer Vorwärtsrichtung einen Winkel ein, der typischerweise 90° betragen kann. Dazu kann es notwendig sein, das Hackwerkzeug auch um eine vertikale Achse am Arm zu bewegen.

Gemäß einer weiteren Ausführungsform der Erfindung weist das Hackgerät sowohl eine im Wesentlichen vertikale Achse, als auch eine im Wesentlichen horizontale Achse auf.

Zwei Rotationsachsen vereinen die obengenannten Rotationsmöglichkeiten und ermöglichen darüber hinaus zusätzliche kombinierte Bewegungen der Hackwerkzeuge, was eine große Flexibilität bei der Bodenbearbeitung ermöglicht.

Gemäß einer Ausführungsform der Erfindung erfolgt die Verschwenkung des Hackwerkzeugs mit einem Aktuator.

Auf diese Weise lässt sich die Verstellung des oder der Hackwerkzeuge mit einem elektrischen Linearaktuator erfolgen, der beispielsweise von einer Steuerschaltung aktiviert werden kann. Der Aktuator kann dabei selbsthemmend ausgeführt sein, sodass sich eine einmal eingestellte Position des Hackwerkzeugs auch bei Abschalten der Steuerschaltung oder bei Verlust eines Steuersignals nicht mehr ändert. Anstelle des Aktuators kann auch ein Hydraulikzylinder oder eine Spindel eingesetzt werden. Ebenso ist es möglich, einen direkt oder indirekt wirkenden Stellmotor vorzusehen, der beispielswiese über Ketten oder Seile wirkt.

Gemäß einer weiteren Ausführungsform der Erfindung ist der Arm relativ zum Aggregatrahmen in diskreten Positionen festlegbar.

Diese Vorgehensweise ist an sich aus dem Stand der Technik bekannt und kann auch in Kombination mit der Erfindung ausgeführt werden. Bei den diskreten Positionen kann es sich um fest vorgegebene unterschiedliche Winkelstellungen handeln, die beispielsweise über eine Aufnahmevorrichtung des Arms vorgegeben sind.

Gemäß einer weiteren Ausführungsform der Erfindung ist am Aggregatrahmen zwischen den beiden Armen eine Rollvorrichtung zur Tiefenführung angeordnet.

Auf diese Weise kann sichergestellt werden, dass das erfindungsgemäße Hackgerät mit seinen Hackwerkzeugen in die korrekte Tiefe des Ackerbodens eindringt.

Gemäß einer weiteren Ausführungsform der Erfindung ist am Aggregatrahmen zwischen den beiden Armen ein weiteres Hackwerkzeug, typischerweise in Form einer Schar, angeordnet.

Bei einem Hackgerät ist es üblich, beispielsweise eine Schar vorzusehen. Eine derartige Vorgehensweise ist somit auch gemäß der Erfindung möglich.

Gemäß einer weiteren Ausführungsform der Erfindung sind der Aggregatrahmen und die Haltevorrichtung über einen weiteren Aktuator zur Tiefeneinstellung an einem Drehgelenk verschwenkbar.

Der weiterer Aktuator kann über eine Kraftmessung eine Tiefenführung bewirken, sodass der Anpressdruck der Rollvorrichtung zur Tiefenführung bei wechselnden Böden gleich gehalten werden kann.

Gemäß einer weiteren Ausführungsform der Erfindung ist die Bewegung des Hackwerkzeugs um eine im Wesentlichen vertikale Achse, und die seines Arms, so aufeinander abgestimmt, dass ein Winkel einer Hauptfläche des Hackwerkszeugs zur Vorwärtsfahrrichtung unverändert bleibt.

Durch das Verschwenken der Arme ändert sich ohne weitere Maßnahmen auch der Winkel der Hackwerkzeuge relativ zur Vorwärtsfahrrichtung. Um dies zu korrigieren, kann eine Kompensation bei elektrischen Aktuatoren errechnet werden. Es ist aber auch denkbar, über geeignete mechanische Übertragung eine Kompensation des Winkels zu bewirken.

Nachfolgend werden einige Ausführungsbeispiele anhand der Zeichnung näher erläutert. Es zeigen:
- Figur 1: in einer perspektivischen Seitenansicht ein Teil einer Ausführungsform eines erfindungsgemäßen Hackgeräts,
- Figur 2: ein Detail des Hackgeräts aus Figur 1 in einer perspektivischen Seitenansicht,
- Figur 3: ein weiteres Detail des Hackgeräts aus Figur 1 in einer perspektivischen Seitenansicht,
- Figur 4: in einer perspektivischen Seitenansicht ein Teil einer weiteren Ausführungsform eines erfindungsgemäßen Hackgeräts, und
- Figur 5: in einer perspektivischen Seitenansicht ein Teil einer weiteren Ausführungsform eines erfindungsgemäßen Hackgeräts.

In den Figuren sind gleiche oder funktional gleichwirkende Komponenten mit den gleichen Bezugszeichen versehen.

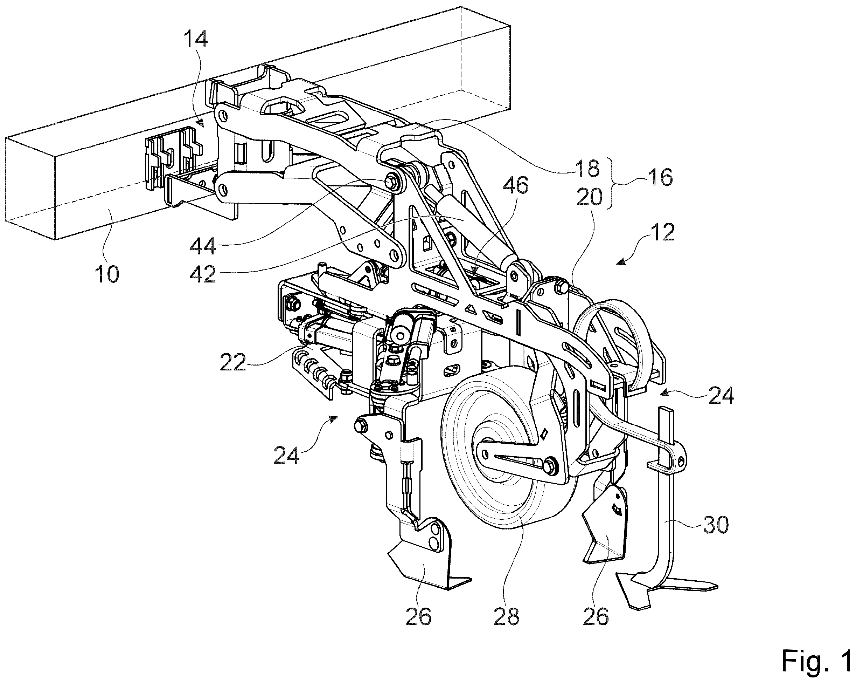

Unter Bezugnahme auf Figur 1 wird nachfolgend eine Ausführungsform des erfindungsgemäßen Hackgeräts 12 gezeigt. Üblicherweise umfasst das Hackgerät 12 mehrere, parallel angeordnete Hackaggregate, um gleichzeitig mehrere Pflanzenreihen bearbeiten zu können. Die mehreren Hackaggregate werden beispielsweise über eine Querstrebe 10 gemeinsam an einem Zugfahrzeug geführt. In der nachfolgenden Beschreibung wird das Hackgerät zur Vereinfachung lediglich anhand eines einzelnen Hackaggregats beschrieben.

Das Hackgerät 12 weist ein Halteelement 14 auf, das über die Querstrebe 10 mit einem Zugfahrzeug, beispielsweise einem Traktor, gekoppelt werden kann. Sollte lediglich ein einzelnes Hackaggregat verwendet werden, kann dieses auch direkt über das Haltelement 14 mit dem Zugfahrzeug verbunden werden. An das Halteelement 14 schließt sich ein im Wesentlichen horizontal ausgerichteter Aggregatrahmen 16 an, der, wie in Figur 1 gezeigt ist, aus einem ersten Teilrahmen 18 und einem zweiten Teilrahmen 20 zusammengesetzt ist.

Am zweiten Teilrahmen 20 sind die eigentlichen Bodenbearbeitungsgeräte angebracht. So ist an der zweiten Teilrahmen 20 an seiner Unterseite mit einem Haltegestell 22 verbunden, in das zwei seitlich abstehende Arme 24 eingesetzt sind, wie weiter unten noch detailliert erläutert wird. An einem dem Haltegestell 22 abgewandten Ende weist jeder Arm 24 ein Hackwerkzeug 26 in Form eines Messers auf. Des Weiteren ist am zweiten Teilrahmen 20 eine Rollvorrichtung 28 zur tiefen Führung angeordnet. Schließlich befindet sich zwischen den beiden Armen 24 ein weiteres Hackwerkzeug 30 in Form einer Schar.

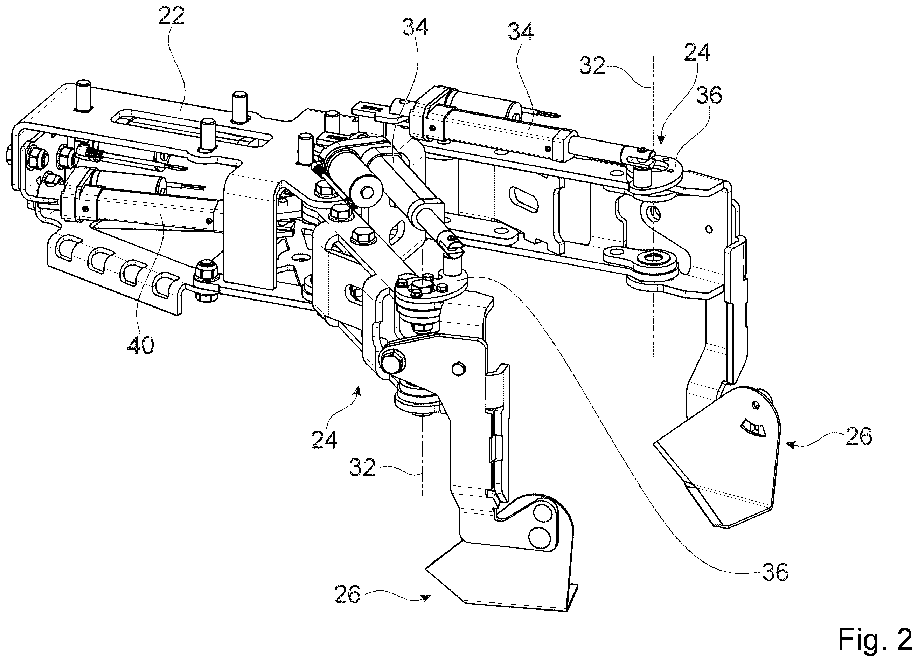

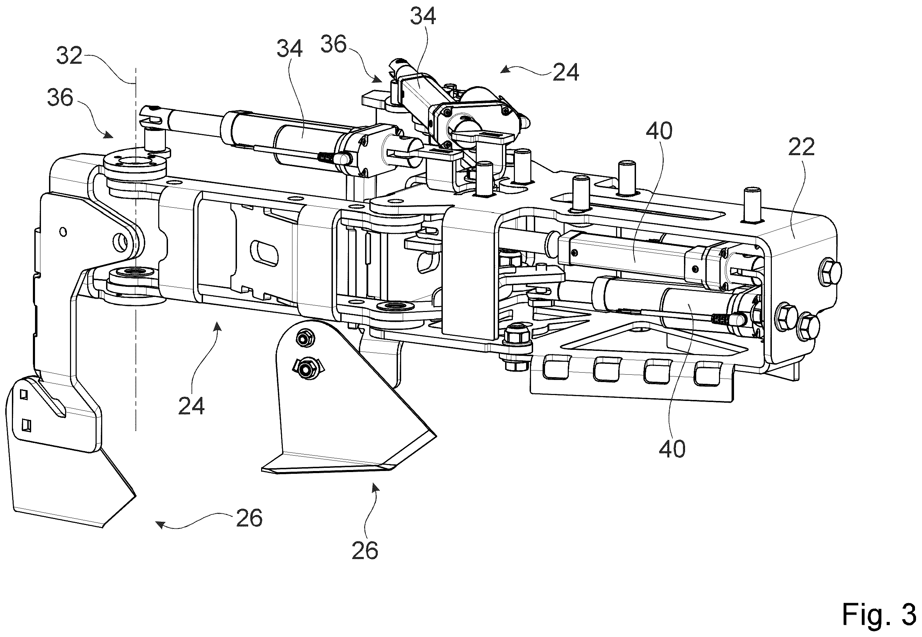

Der Aufbau der Arme 24 des Hackgeräts 12 wird nachfolgend unter Bezugnahme auf die Figuren 2 und 3 nochmals detailliert erläutert. In den beiden Figuren 2 und 3 sind lediglich die Arme 24 im Haltegestell 22 in perspektivischen Seitenansichten aus unterschiedlichen Blickrichtungen dargestellt. Man erkennt, dass das Hackwerkzeug 26 um eine im wesentlichen vertikale Achse 32 am Ende des jeweiligen Arms 24 verschwenkbar ist, sodass es kontinuierlich um die vertikale Achse 32 verlagert werden kann. Auf diese Weise lässt sich der Winkel des Hackwerkzeugs 26 relativ zu seinem Arm 24 und somit auch relativ zum Aggregatrahmen 16 verstellen.

Wie in den beiden Figuren 2 und 3 gezeigt ist, erfolgt die Verstellung des Hackwerkzeugs 26 um die vertikale Achse 32 mittels erster Aktuatoren 34, welche zwischen einer Aufnahmeplatte 36 am Arm 24 und dem Haltegestell 22 wirken.

Der Aktuator 34 kann dabei selbsthemmend ausgeführt sein, sodass sich eine einmal eingestellte Position des Hackwerkzeugs 26 auch bei Abschalten oder bei Verlust eines Steuersignals nicht mehr ändert. Anstelle des Aktuators 34 kann auch ein Hydraulikzylinder oder eine Spindel eingesetzt werden.

Des Weiteren ist den beiden Figuren 2 und 3 zu entnehmen, dass die Arme 24 ebenfalls über weitere Aktuatoren 40 relativ zum Haltegestell 22 kontinuierlich verschwenkt werden können. Die Bewegung des Hackwerkzeugs und seines Arms 24 können so aufeinander abgestimmt sein, dass ein Winkel einer Hauptfläche des Hackwerkszeugs 26 zur Vorwärtsfahrrichtung unverändert bleibt.

Wie in Figur 1 gezeigt ist, kann über einen Hydraulik-Zylinder 42 das Hackgerät 12 an einem Drehgelenk 44 zum Einzelaushub verschwenkt werden und zusätzlich belastet oder entlastet werden. Außerdem ist es vorgesehen, wie in Figur 1 gezeigt ist, über einen weiteren Aktuator 46 unterhalb des Hydraulik-Zylinder 42 die Rollvorrichtung 28 am Aggregatrahmen 16 zur Tiefeneinstellung zu heben oder zu senken. Dazu kann auch eine optionale Messeinrichtung zur Bestimmung des Anpressdrucks der Rollvorrichtung 28 bereitgestellt sein.

Das Hackgerät 12 wird im Betrieb zwischen zwei Pflanzenreihen geführt. Demnach lässt sich bei dem erfindungsgemäßen Hackgerät als zusätzliche Funktion der Winkel vom Hackwerkzeug 26 zwischen der Pflanzenreihe und dem Hackwerkzeug 26 stufenlos einstellen, da das Hackwerkzeug 26 relativ zum Aggregatrahmen 16 kontinuierlich um die vertikale Achse 32 verschwenkbar ist. Die Verstellung der Hackwerkzeuge 26 ist für beide Arme 24 unabhängig möglich. Die Arme 24 können ebenfalls kontinuierlich verschwenkt werden. Es ist aber auch denkbar, die Arme 24 lediglich in diskreten Positionen verstellbar auszugestalten oder fest am Aggregatrahmen 16 zu befestigen. Auch können die Arme 24 sowohl einzeln als auch paarweise verstellbar ausgeführt sein.

Sowohl die Verstellung der Hackwerkzeuge 26 als auch die Verstellung der Arme 24 oder die Tiefeneinstellung der Rollvorrichtung 28 kann mittels einer Steuerschaltung vorgenommen werden. Über entsprechende Sensoren wäre es möglich Signale an die Steuerschaltung zur Kontrolle zurückzuführen.

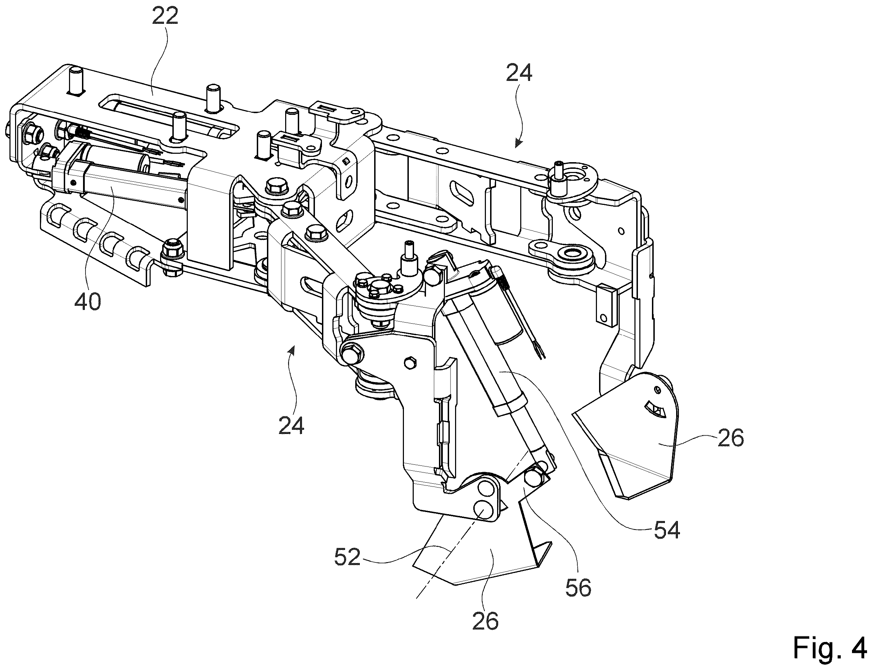

In Figur 4 ist eine weitere Ausführungsform gezeigt, bei der das Hackwerkzeug 26 mittels eines Aktuators 54 um eine im Wesentlichen horizontale Achse 52 am Ende des jeweiligen Arms verschwenkbar ist, wobei der Aktuator 54 an der Aufnahme 56 angreift. Es ist so kontinuierlich um die horizontale Achse 52 verlagerbar, wodurch sich der Anstellwinkel des Hackwerkzeugs 26 relativ zu seinem Arm 24 und somit auch zum Aggregatrahmen 16 verstellen lässt.

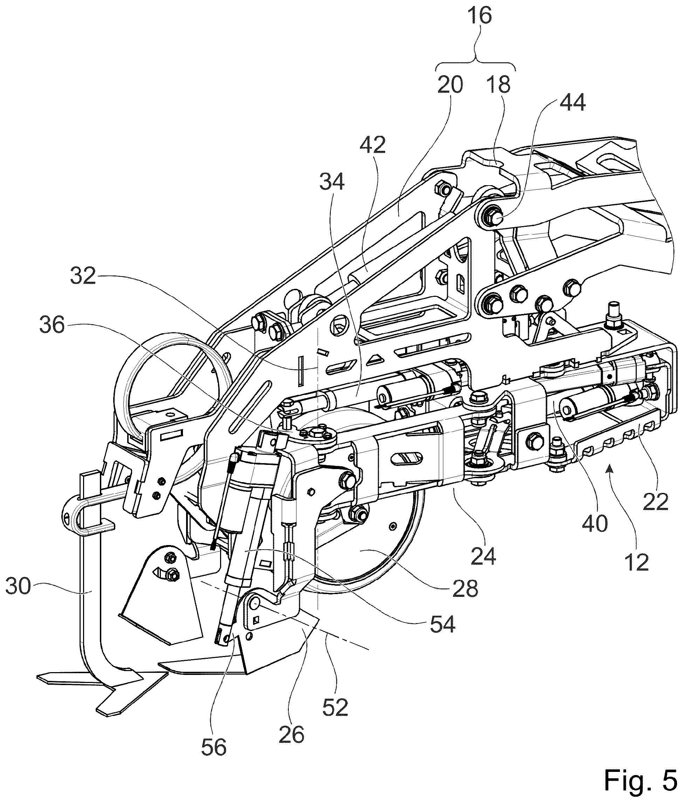

In Figur 5 ist als weitere Ausführungsform ein Hackaggregat gezeigt, dessen Konstruktion dem in Figur 1 gezeigten ähnelt, mit dem wesentlichen Unterschied, dass das Hackwerkzeug 26 sowohl mittels eines Aktuators 34 um eine im Wesentlichen vertikale Achse 32, als auch mittels eines weiteren Aktuators 54 um eine im Wesentlichen horizontale Achse 52 verschwenkt werden kann.

Die Verstellung des Hackwerkzeugs 26 um die horizontale Achse 52 ist in den-Figuren 4 und 5 nur für einen Arm gezeigt. Selbstverständlich ist es möglich, auch beide Arme 24 entsprechend mit einer Verstellmöglichkeit auszustatten. Die Verstellung des Hackwerkzeugs 26 um die horizontale Achse 52 kann dabei für beide Arme 24 unabhängig voneinander erfolgen. Ebenso ist es möglich, die Verstellung für beide Arme 24 gleichförmig durchzuführen. Des Weiteren ist den Figuren 4 und 5 zu entnehmen, dass die Arme 24 ebenfalls über weitere Aktuatoren 40 relativ zum Haltegestell 22 kontinuierlich verschwenkt werden können.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Aggregatrahmen fachmännischen Könnens in mancherlei Weise abwandelbar.

### Liste der Bezugszeichen:

- 10: Querstrebe
- 12: Hackgerät
- 14: Halteelement
- 16: Aggregatrahmen
- 18: erster Teilrahmen
- 20: zweiter Teilrahmen
- 22: Haltegestell
- 24: Arm
- 26: Hackwerkzeug
- 28: Rollvorrichtung
- 30: weiteres Hackwerkzeug
- 32: Achse
- 34: Aktuator
- 36: Aufnahmeplatte
- 40: weiterer Aktuator
- 42: Hydraulik-Zylinder
- 44: Drehgelenk
- 46: weiterer Aktuator
- 52: horizontale Achse
- 54: weiterer Aktuator
- 56: Aufnahme

## Patentansprüche

1. Hackgerät (12), das ein an einem Zugfahrzeug oder an einer Querstrebe (10) befestigbares Halteelement (14) aufweist, an das sich ein im Wesentlichen horizontal ausgerichteter Aggregatrahmen (16) anschließt, wobei der Aggregatrahmen (16) auf beiden Seiten jeweils einen seitlich zu einer Vorwärtsfahrrichtung abstehenden Arm (24) umfasst, welche am Ende jeweils ein Hackwerkzeug (26) aufweisen, wobei das Hackwerkzeug (26) relativ zu seinem Arm (24) über eine Stellvorrichtung kontinuierlich um wenigstens eine Achse (32; 52) verschwenkbar ist, wobei wenigstens einer der Arme (24) relativ zum Aggregatrahmen (16) beweglich ist.

2. Hackgerät nach Anspruch 1, bei dem die Achse (32) im Wesentlichen vertikal angeordnet ist.

3. Hackgerät nach Anspruch 1, bei dem die Achse (52) im Wesentlichen horizontal angeordnet ist.

4. Hackgerät nach Anspruch 1, das sowohl eine im Wesentlichen vertikale Achse (32), als auch eine im Wesentlichen horizontale Achse (52) aufweist.

5. Hackgerät nach einem der Ansprüche 1 bis 4, bei dem die Verschwenkung des Hackwerkzeugs (26) mit Aktuatoren (34) erfolgt.

6. Hackgerät nach einem der Ansprüche 1 bis 5, bei dem der Arm (24) relativ zum Aggregatrahmen (16) in diskreten Positionen festlegbar ist.

7. Hackgerät nach Anspruch 1 bis 6, bei dem die beiden Arme (24) unabhängig voneinander relativ zum Aggregatrahmen (16) beweglich sind.

8. Hackgerät nach einem der Ansprüche 1 bis 7, bei dem die Bewegung der Arme (24) mit einem weiteren Aktuator (40) erfolgt.

9. Hackgerät nach einem der Ansprüche 1 bis 8, bei dem am Aggregatrahmen (16) zwischen den beiden Armen (24) eine Rollvorrichtung (28) zur Tiefenführung angeordnet ist.

10. Hackgerät nach einem der Ansprüche 1 bis 9, bei dem am Aggregatrahmen (16) zwischen den beiden Armen (24) ein weiteres Hackwerkzeug (30), typischerweise in Form einer Schar, angeordnet ist.

11. Hackgerät nach einem der Ansprüche 9 oder 10, bei dem die Rollvorrichtung (28) am Aggregatrahmen (16) über einen weiteren Aktuator (46) zur Tiefeneinstellung verschwenkbar ist.

12. Hackgerät nach einem der Ansprüche 1 bis 2 und 4 bis 11, bei dem die Bewegung des Hackwerkzeugs (26) um eine im Wesentlichen vertikale Achse (32) und die seines Arms (24) so aufeinander abgestimmt sind, dass ein Winkel einer Hauptfläche des Hackwerkszeugs (26) zur Vorwärtsfahrrichtung unverändert bleibt.
